(19) Europäisches Patentamt
European Patent Office
Office européen des brevets

(11) **EP 2 975 486 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.05.2024 Patentblatt 2024/22**

(45) Hinweis auf die Patenterteilung:
**22.08.2018 Patentblatt 2018/34**

(21) Anmeldenummer: **15177264.7**

(22) Anmeldetag: **17.07.2015**

(51) Internationale Patentklassifikation (IPC):
**G05D 7/06** (2006.01)

(52) Gemeinsame Patentklassifikation (CPC):
**B67C 3/007; B67C 3/286; G05D 7/0635**

(54) **VERFAHREN ZUM BEFÜLLEN EINES BEHÄLTERS MIT EINEM FÜLLPRODUKT MITTELS EINES PROPORTIONALVENTILS**

METHOD FOR FILLING A CONTAINER WITH A FILL PRODUCT BY MEANS OF A PROPORTIONAL VALVE

PROCÉDÉ DE REMPLISSAGE D'UN RÉCIPIENT AVEC UN PRODUIT DE REMPLISSAGE A L'AIDE D'UNE SOUPAPE PROPORTIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2014 DE 102014110161**

(43) Veröffentlichungstag der Anmeldung:
**20.01.2016 Patentblatt 2016/03**

(73) Patentinhaber: **Krones AG**
**93073 Neutraubling (DE)**

(72) Erfinder:
• **ANGERER, Florian**
**93073 Neutraubling (DE)**
• **DOBLINGER, Josef**
**93073 Neutraubling (DE)**

(74) Vertreter: **Nordmeyer, Philipp Werner**
**df-mp Dörries Frank-Molnia & Pohlman Patentanwälte Rechtsanwälte PartG mbB Theatinerstraße 16 80333 München (DE)**

(56) Entgegenhaltungen:
WO-A1-98/49089        WO-A1-2014/206774
DE-A1- 19 647 446     JP-B2- 3 373 269

EP 2 975 486 B2

**Beschreibung**

Technisches Gebiet

Die vorliegende Erfindung betrifft ein Verfahren zum Befüllen eines Behälters mit einem Füllprodukt mittels eines Proportionalventils, insbesondere zum Befüllen eines Behälters mit einem Getränk.

Stand der Technik

Zum Befüllen von Behältern mit Füllprodukten in Getränkeabfüllanlagen sind unterschiedliche Möglichkeiten zur Bestimmung des in den zu befüllenden Behälter einfließenden Volumenstroms des Füllprodukts bekannt, um das Füllende beziehungsweise den Abschaltzeitpunkt festzulegen.

Beispielsweise ist es bekannt, das Gewicht des Behälters über eine Wägezelle zu messen und über die während der Befüllung auftretende Gewichtsveränderung den in den Behälter einströmenden Volumenstrom zu bestimmen, um auf diese Weise einen Abschaltzeitpunkt zu bestimmen.

Weiterhin ist es bekannt, das in den Behälter einströmende Füllprodukt über einen Volumenstrommesser, beispielsweise einen induktiven Volumenstrommesser, zu bestimmen. Dieser Volumenstrommesser ist dabei typischerweise oberhalb des Füllventils angeordnet und misst den während des Füllvorgangs in den Behälter einströmenden Volumenstrom. Entsprechend kann nach Erreichen eines vorbestimmten Füllvolumens der Füllvorgang beendet werden.

Die bekannten Verfahren zum Beenden der Befüllung sind entsprechend Regelverfahren, bei welchen ein Messglied vorgesehen ist, beispielsweise ein Durchflussmesser oder eine Wägezelle, über welches die Befüllung geregelt wird.

Füllventile, sowie das die Füllventile durchströmende Füllprodukt haben eine gewisse Grundträgheit, so dass es beim Erteilen des Schließbefehles am Ende des Füllvorganges nicht sofort zu einem unmittelbaren Stoppen des Füllproduktstromes kommt, sondern ein gewisser Nachlauf vorhanden ist. Um ein exaktes Befüllen eines Behälters mit einem vorgegebenen Füllvolumen zu ermöglichen, ist es notwendig, diesen Nachlauf zu bestimmen und entsprechend den Zeitpunkt des Erteilens des Schließbefehls so weit nach vorn zu verlegen, dass unter Berücksichtigung des Nachlaufs das korrekte Füllvolumen in dem Behälter erreicht wird.

Hierzu ist es bekannt, über das Messglied auch nach dem Abschalten des Füllventils den jeweiligen Nachlauf zu messen, beispielsweise über die Wägezelle oder über den Volumenstromsensor, und dann entsprechend auf Grundlage der Kenntnis des Nachlaufvolumens den Abschaltzeitpunkt des Füllvorgangs entsprechend vorzuverlegen. Es handelt sich entsprechend um eine Regelung, bei welcher ein Messglied zur Bestimmung des Nachlaufvolumens vorgesehen ist und der Abschaltzeitpunkt, zu welchem das Füllventil geschlossen wird, um das Nachlaufvolumen korrigiert festgelegt wird.

Um das in den Behälter einströmende Füllvolumen stufenlos steuern zu können und entsprechend je nach Füllprodukt optimierte Volumenstromkurven nachfahren zu können, sind Füllventile bekannt, welche als Proportionalventil ausgebildet sind und welche entsprechend eine im Wesentlichen stufenlose Steuerung des Volumenstroms ermöglichen. Ein solches Proportionalventil ist üblicherweise über einen Schrittmotor angesteuert, derart, dass es eine gewünschte Öffnungsposition zuverlässig und reproduzierbar erreichen kann. Durch die Ansteuerung des Proportionalventils mit dem Schrittmotor ist jedoch der Schließvorgang zum Ende des Füllvorganges hin deutlich langsamer, als bei einem herkömmlichen Schaltventil. Die erreichbaren Schließzeiten sind in etwa um einen Faktor 5 länger. Entsprechend ist auch das Nachlaufvolumen, welches von der Schließanforderung bis zum vollständigen Schließen des Proportionalventils dieses durchfließt, deutlich größer, als bei einem herkömmlichen Schaltventil.

Auch bei Verwendung eines solchen Proportionalventils ist es bekannt, das Nachlaufvolumen bei jedem Füllvorgang zu bestimmen, beispielsweise über einen Volumenstromsensor oder eine Wägezelle, und entsprechend über eine Regelung den optimierten Abschaltzeitpunkt zu bestimmen. Der Nachlaufvolumenstrom variiert jedoch sowohl mit der Viskosität des Füllprodukts als auch mit dem Differenzdruck, also entsprechend mit der Füllhöhe des Füllprodukts im Vorlagekessel, so dass der Regelvorgang für jeden Füllvorgang aufs Neue durchgeführt werden muss und die Füllergebnisse entsprechend der Regelgeschwindigkeit variieren.

Die JP 3373269 B2 beschreibt eine Ventilsteuereinheit zur Steuerung des Öffnungsrads eines Ventils, die eine Strömungsratensteuerung und eine Steuerung des Wasserniveaus durchführen kann. Die WO 98/49089 A1 beschreibt ein Verfahren und eine Vorrichtung zum Füllen von Fässern. Die WO 2014/206774 A1, die Stand der Technik nach Artikel 54(3) EPÜ ist, beschreibt ein Verfahren sowie ein System zum Füllen von Behältern.

Darstellung der Erfindung

Ausgehend von dem bekannten Stand der Technik ist es eine Aufgabe der vorliegenden Erfindung, ein Verfahren zum Befüllen eines Behälters mit einem Füllprodukt mittels eines Proportionalventils anzugeben, welches einen vereinfachten Aufbau aufweist.

Diese Aufgabe wird durch ein Verfahren mit den Merkmalen der unabhängigen Ansprüche gelöst. Vorteilhafte Weiterbildungen ergeben sich aus den Unteransprüchen.

Entsprechend wird ein Verfahren zum Befüllen eines Behälters mit einem Füllprodukt mittels eines Proportionalventils vorgeschlagen, umfassend die Schritte des Ermittelns des Volumenstroms q(t) als eine Funktion der Zeit für eine vorgegebene Öffnungskurve H(t) des Proportionalventils und das Steuern der Befüllung des Behälters auf Grundlage der Funktion des Volumenstroms q(t).

Durch die Ermittlung der Funktion des Volumenstroms für die Öffnungskurve des Proportionalventils kann der Füllvorgang auf Grundlage des ermittelten Volumenstroms gesteuert werden. Entsprechend entfällt die aufwändige aus dem Stand der Technik bekannte Regelung und auf die entsprechenden Messglieder, beispielsweise den Volumenstrommesser oder die Wägezelle, kann verzichtet werden.

Der das Proportionalventil durchströmende Volumenstrom kann damit aus der ermittelten Funktion für jede beliebige Öffnungsposition des Proportionalventils berechnet werden. Über die berechnete Volumenstromkurve, welche den tatsächlich in den Behälter einströmenden Volumenstrom des Füllprodukts angibt, kann entsprechend der Füllvorgang angesteuert werden und besonders auch der Abschaltzeitpunkt ermittelt werden.

Es wird weiterhin ein Verfahren zum Befüllen eines Behälters mit einem Füllprodukt mittels eines Proportionalventils vorgeschlagen, umfassend die Schritte des Ermittelns einer Funktion des Volumenstroms q(t) für eine vorgegebene Öffnungskurve H(t) des Proportionalventils, des Berechnens eines berechneten Ist-Volumenstroms $q_{\text{ist-berechnet}}$ auf Grundlage der ermittelten Funktion des Volumenstroms q(t) für eine Ist-Öffnungsposition $H_{\text{ist}}$ des Proportionalventils, und des Regelns der Befüllung des Behälters mit einer Soll-Volumenstrom-Kurve $q_{\text{soll}}(t)$ als Führgröße und dem berechneten Ist-Volumenstrom $q_{\text{ist-berechnet}}$ als Regelgröße.

Auf diese Weise übernimmt die Berechnung des berechneten Ist-Volumenstroms die Funktion eines Messglieds, welches üblicherweise den Ist-Volumenstrom messen würde und diesen als Regelgröße zum Vergleich mit der durch den Soll-Volumenstrom vorgegebenen Führgröße an die Regelung zurückgeben würde. Entsprechend kann auch bei einer Regelung auf das Messglied verzichtet werden und auf diese Weise ein technisch vereinfachter und zuverlässiger Aufbau bereitgestellt werden.

Besonders bevorzugt wird dabei die Funktion des Leitwerts Kv(H) des Proportionalventils für jede Öffnungsposition H durch vorheriges Messen des Leitwerts Kv bei diskreten Öffnungspositionen H und Bestimmen einer Funktion des Leitwerts Kv(H) aus den diskreten Werten, bevorzugt durch das Bestimmen einer Ausgleichsfunktion, ermittelt. Besonders bevorzugt wird hierbei die Funktion des Leitwerts Kv(H) durch eine Regressionsanalyse, die Methode der kleinsten Quadrate, die Bestimmung eines Fits oder die Bestimmung eines Ausgleichspolynoms, bevorzugt eine Ausgleichspolynoms 6. Ordnung, an die diskreten Werte angepasst.

Bevorzugt wird zum Messen des Leitwerts Kv an einer Öffnungsposition H der Volumenstrom q, der Differenzdruck $\Delta p$ und die Dichte $\delta$ des das Proportionalventil durchfließenden Mediums bestimmt und der Leitwert wie folgt berechnet:

$$K_v = q_\infty * \sqrt{\frac{1000\,mbar}{\Delta p} * \frac{\delta}{1000\,kg/m^3}}\,.$$

In dem oben angegebenen Verfahren wird bevorzugt der Differenzdruck $\Delta p$ über Drucksensoren im Kesselboden des Vorlagekessels und Addition der statischen Höhe bis zum Ventilauslauf, über Niveausensoren im Vorlagekessel und Addition der statischen Höhe bis zum Ventilauslauf, und/oder über Drucksensoren direkt am Auslauf des Füllorgans bestimmt.

Bei der Berechnung des Volumenstroms für eine vorgegebene Öffnungskurve des Proportionalventils wird weiterhin auch berücksichtigt, dass beim dynamischen Verändern der Öffnungsposition, also beim Öffnen, Schließen oder Verändern des Volumenstroms des Proportionalventils, der jeweils das Proportionalventil durchfließende Volumenstrom nicht genau dem Volumenstrom entspricht, welcher sich bei konstanter Öffnung des Proportionalventils nach langer Zeit eingestellt hätte. Vielmehr handelt es sich hierbei um ein dynamisches Verhalten des Volumenstroms, welches über die Berechnung des Volumenstroms für die vorgegebene Öffnungskurve des Proportionalventils ermittelt werden kann.

Erfindungsgemäß wird der Volumenstrom q(t) für eine vorgegebene Öffnungskurve H(t) des Proportionalventils durch Lösung einer mechanischen Maschengleichung bestimmt und für abfallende Öffnungspositionen H(t) durch

$$q(t) = q_\infty + (q_0 - q_\infty) * e^{-\frac{\Delta t}{\tau}}$$

$$\text{mit } \tau = K_v(H) * m$$

$$\text{mit } q_\infty = K_v * \sqrt{\frac{\Delta p}{1000 mbar} * \frac{1000 kg/m^3}{\delta}}$$

mit $q_0$ = Volumenstrom zum Beginn des Einschwingvorgangs und
mit m = Konstante

und für ansteigende Öffnungspositionen H(t) durch

$$q(t) = q_0 + (q_\infty - q_0) * (1 - e^{-\frac{\Delta t}{\tau}})$$

$$\text{mit } \tau = K_v(H) * m$$

$$\text{mit } q_\infty = K_v * \sqrt{\frac{\Delta p}{1000 mbar} * \frac{1000 kg/m^3}{\delta}}$$

mit $q_0$ = Volumenstrom zum Beginn des Einschwingvorgangs
mit m = Konstante

gelöst.

Entsprechend lässt sich nicht nur für eine statische Öffnungsposition, sondern auch für eine beliebige dynamische Öffnungskurve des Proportionalventils die entsprechende Volumenstromkurve des in den Behälter einströmenden Füllprodukts bestimmen, so dass diese Volumenstromkurve zur Steuerung des Füllvorganges hinzugezogen werden kann.

Insbesondere lässt sich auf diese Weise ein Abschaltzeitpunkt für das Proportionalventil bestimmen. Hierzu wird zunächst die Schließkurve H(t) des Proportionalventils für den Abschaltvorgang festgelegt. In dieser Schließkurve werden üblicherweise drei Bewegungsabschnitte durchlaufen, welche der Schrittmotor zu durchfahren hat, nämlich zunächst die Beschleunigung mit einer vorgegebenen Beschleunigung bis zum Erreichen einer vorgegebenen konstanten Geschwindigkeit, dann Schließen des Ventils mit der konstanten Geschwindigkeit und dann als dritte Bewegungsphase das Abbremsen mit einer vorgegebenen negativen Beschleunigung bis zum Erreichen der Geschwindigkeit Null beim vollständigen Schließen des Ventils. Diese Bewegungsform wird im Übrigen auch beim Öffnen beziehungsweise bei jeder Veränderung der Öffnungsposition des Proportionalventils durch den Schrittmotor durchgeführt. Es wird immer zunächst eine Beschleunigung aus der stehenden Position des Ventils zu einer vorgegebenen konstanten Geschwindigkeit und dann wieder ein Abbremsen durchgeführt, bis das Ventil an der vorbestimmten Position wieder zum Stehen kommt. Damit ergeben sich dann die entsprechenden Öffnungskurven H(t).

Die entsprechend vorgegebene Öffnungskurve H(t) beziehungsweise Schließkurve H(t) wird nun zur Berechnung des Nachlaufvolumens hinzugezogen. Entsprechend wird der auftretende Volumenstrom für die vorgegebene Schließkurve berechnet und daraus beispielsweise durch Integration, das beim Durchfahren der Schließkurve noch in den Behälter einfließende Nachlaufvolumen berechnet. Auf dieser Grundlage kann dann der Füllvorgang so gesteuert werden, dass zu einem auf diese Weise ermittelten Schließzeitpunkt der Befehl zum Durchfahren der Schließkurve gegeben wird. Entsprechend wird so erreicht, dass ohne weitere Regelschritte bereits beim ersten Füllvorgang das gewünschte Füllvolumen erreicht wird.

Die Bestimmung der Volumenstromkurve q(t) für die vorgegebene Öffnungskurve des Proportionalventils dient weiterhin dazu, das gesamte Füllvolumen an Füllprodukt, welches in den zu befüllenden Behälter mittels des Proportionalventils eingegeben wird, zu bestimmen. Auch auf diese Weise kann entsprechend nach Berechnung des über die vorgegebene Öffnungskurve hinweg integrierten beziehungsweise aufsummierten Füllvolumens der Abschaltzeitpunkt korrekt bestimmt werden, und insbesondere der Zeitpunkt, zu dem die Schließkurve durchfahren wird, festgelegt werden.

Bevorzugt werden entsprechend nach der Bestimmung der Funktion des Volumenstroms q(t) alle nachfolgenden Befüllvorgänge anhand dieser Funktion gesteuert oder die Funktion des Volumenstroms q(t) wird für jede neue Befüllung auf Basis der Funktion des Leitwerts Kv(H) neu berechnet.

Bevorzugt wird für eine vorgegebene Schließkurve H(t) zum Beenden des Füllvorgangs der Volumenstrom q(t)

und durch Integration über den Volumenstrom das Nachlaufvolumen berechnet und dabei bei der Bestimmung des Zeitpunkts zum Durchlaufen der Schließkurve das Nachlaufvolumen berücksichtigt.

Damit wird bevorzugt das Nachlaufvolumen für jeden Befüllvorgang kurz vor dem geschätzten Füllende berechnet, um die entsprechenden Umgebungsbedingungen, insbesondere den Volumenstrom, den Differenzdruck und die Dichte möglichst genau bestimmen zu können.

Besonders bevorzugt wird das gesamte Füllvolumen des Füllprodukts durch Integration der Funktion des Volumenstroms q(t) über den Füllvorgang hinweg bestimmt wird und das Füllende auf dieser Grundlage bestimmt.

Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:

Figur 1    eine schematische Darstellung einer gemessenen Volumenstromkurve (q(t);
Figur 2    eine schematische Darstellung einer Kurve des Leitwerts Kv über dem Hub H eines Proportionalventils;
Figur 3    eine schematische Darstellung eines elektrischen Ersatzschaltbildes;
Figur 4    eine schematische Darstellung des Vergleichs einer gemessenen und einer berechneten Volumenstromkurve q(t);
Figur 5    eine schematische Darstellung einer Schließkurve H(t) eines Proportionalventils und des gemessenen Volumenstroms q(t);
Figur 6    eine schematische Darstellung einer Schließkurve H(t) mit einer berechneten und einer gemessenen Volumenstromkurve q(t);
Figur 7    eine schematische Darstellung einer gemessenen Volumenstromkurve q(t) in einem alternativen Ausführungsbeispiel; und
Figur 8    eine schematische Darstellung eines Regelkreises, welcher eine Regelung des Proportionalventils auf Grundlage einer Soll-Volumenstromkurve ausführt.

Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugzeichen bezeichnet und auf eine wiederholte Beschreibung dieser Elemente wird in der nachfolgenden Beschreibung teilweise verzichtet, um Redundanzen zu vermeiden.

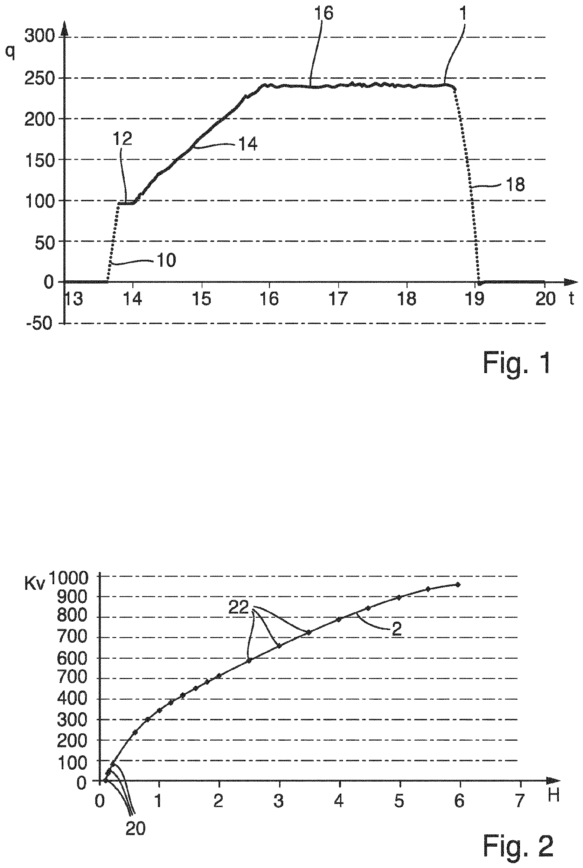

In Figur 1 ist die Kurve eines gemessenen Volumenstroms 1 bei einem Füllvorgang über die Zeit t hinweg gezeigt. Der Volumenstrom q(t) ist das Volumen der das Proportionalventil durchfließenden Flüssigkeit pro Zeit und wird hier in der Einheit ml/sek. angegeben.

Eine solche Kurve des gemessenen Volumenstroms 1 ergibt sich beispielsweise, wenn ein Proportionalventil mit einer vorgegebenen Öffnungskurve angesteuert wird und entsprechend unterschiedliche Öffnungspositionen beziehungsweise Rampen der Öffnungsposition des Proportionalventils während des Füllvorganges durchfahren werden. Die in Figur 1 gezeigte Kurve des gemessenen Volumenstroms 1 wurde für ein bestimmtes Proportionalventil mittels eines Durchflussmessers bestimmt und ist entsprechend das Resultat der vom Proportionalventil durchlaufenen Öffnungspositions-Kurve H(t), so dass sich die Volumenstromkurve als q(H(t)) ergibt.

Es ist in dem Beispiel zu erkennen, dass auf einen Öffnungsvorgang 10 ein kurzer Plateaubereich 12 gefolgt von einer eine Öffnungsrampe 14 durchfahren wird. Dann wird die hauptsächliche Befüllung in einem Plateaubereich 16 hohen Volumenstroms durchgeführt und dann eine Schließkurve 18 durchlaufen. Das hier gezeigte Beispiel ist nur exemplarisch zu verstehen, zeigt aber ein übliches Verhalten des Volumenstroms 1 beim Abfüllen von Getränken, wobei ein möglichst schonendes Abfüllen bei einer geringen Aufschäumneigung sowie genauem Erreichen des gewünschten Füllvolumens erreicht werden soll.

Aus der gemessenen Kurve des Volumenstroms 1 ist auch zu erkennen, dass ein schlagartiges Ansteigen des Volumenstroms beim Öffnungsvorgang 10 und ein schlagartiges Beenden des Volumenstroms beim Durchfahren der Schließkurve 18 nicht vorliegt. Vielmehr haben die entsprechenden Kurven eine endliche Steigung beziehungsweise einen komplexeren Verlauf. Dies liegt zum Einen daran, dass ein Proportionalventil eine endliche Zeit für den Öffnungs- und Schließvorgang benötigt, und zum Anderen daran, dass das durchfließende Medium eine gewisse Trägheit aufweist, die verhindert, dass das Medium der Öffnungsposition des Proportionalventils unmittelbar folgt.

Die nachfolgend beschriebene Bestimmung der Kurve des Volumenstroms 1 anhand einer vorgegebenen Öffnungskurve des Proportionalventils ermöglicht es, eine Volumenstromkurve 1 auch ohne eine tatsächliche Messung des Volumenstroms zu bestimmen. Die Volumenstromkurve 1 kann vielmehr mittels des nachfolgend beschriebenen Kv-Modells berechnet beziehungsweise simuliert werden. Entsprechend kann auf das oben beschriebene Messglied in Form des Durchflussmessers oder einer Wägezelle im normalen Füllbetrieb verzichtet werden, so dass eine auf diese Weise gesteuerte Füllvorrichtung einfacher, kostengünstiger und zuverlässiger aufgebaut werden kann.

Um die Bestimmung der Volumenstromkurve q(H(t)) aus der Öffnungspositionskurve H(t) des Proportionalventils zu ermöglichen, damit im tatsächlichen Füllbetrieb auf die Verwendung eines Regelkreises und insbesondere auf ein Messglied verzichtet werden kann, wird folgendes Verfahren vorgeschlagen:

Zunächst wird eine Funktion des Leitwerts Kv(H) des Proportionalventils für jede Öffnungsposition H des Proportionalventils bestimmt. Der Leitwert Kv wird auch als Durchflussfaktor oder Durchflusskoeffizient bezeichnet. Er ist ein Maß für den erzielbaren Durchsatz einer Flüssigkeit oder eines Gases durch das Proportionalventil, wird hier in der Einheit ml/sek angegeben und ist als effektiver Querschnitt interpretierbar. Jeder Kv-Wert gilt nur für die zugehörige Öffnungsposition H des Proportionalventils.

Zur Bestimmung des Leitwerts Kv wird in einem initialen Kalibriervorgang eine bestimmte Öffnungsposition $H_i$ des Proportionalventils angefahren, der Füllproduktstrom q(H) aus dem Proportionalventil bei dieser Öffnungsposition $H_i$ gemessen und daraus im eingeschwungenen Zustand der Leitwert Kv, beispielsweise über eine Messung mittels einer Messzelle wie einer Wiegezelle, bestimmt. Dies wird für eine Vielzahl diskreter Öffnungspositionen $H_i$ des Proportionalventils durchgeführt.

Zwischen Kv-Wert und Volumenstrom $q_\infty$ (Volumenstrom im eingeschwungenen Zustand) gilt folgender Zusammenhang:

$$q_\infty = K_v * \sqrt{\frac{\Delta p}{1000 mbar} * \frac{1000 kg / m^3}{\delta}} \quad (1)$$

mit $\Delta p$ Differenzdruck zwischen Ventilauslauf und statischem Niveau des Füllproduktspiegels mit $\delta$ Dichte des abzufüllenden Produktes.

Entsprechend müssen zur exakten Bestimmung des Leitwerts Kv neben der oben genannten Messung des Volumenstroms bei einer bestimmten Öffnungsposition auch noch der Differenzdruck $\Delta p$ und die Dichte $\delta$ des das Proportionalventil durchfließenden Mediums bestimmt werden.

Der Differenzdruck $\Delta p$ zwischen dem Ventilauslauf und dem statischen Niveau variiert mit dem statischen Niveau des Füllprodukts, welches beispielsweise in einem Vorlagekessel eingebracht sein kann. Es bestehen in einer Getränkeabfüllanlage beispielsweise folgende Varianten zur Bestimmung des Differenzdrucks:

- Über Drucksensoren im Kesselboden des Vorlagekessels und Addition der statischen Höhe bis zum Ventilauslauf, auf dieses Weise ist die Gesamtdruckdifferenz bestimmbar.
- Über Niveausensoren im Vorlagekessel und Addition der statischen Höhe bis zum Ventilauslauf, wodurch die gesamte auf dem Ventilauslauf lastende Flüssigkeitssäule bestimmbar ist und hieraus die Gesamtdruckdifferenz bestimmt werden kann. An dieser Art der Bestimmung der Gesamtdruckdifferenz kann aber nachteilig sein, dass beispielsweise Wellen des Füllprodukts im Kessel sowie durch unterschiedliche Abfüllgeschwindigkeiten hervorgerufene Zentrifugaleffekte auf das Füllprodukt nicht optimal berücksichtigt werden können.
- Über Drucksensoren direkt am Auslauf des Füllorgans kann der Differenzdruck exakt bestimmt werden. Durch den Drucksensor kann aber möglicherweise das Fließverhalten des Füllprodukts am Füllventilauslauf und damit der eigentliche Füllvorgang beeinflusst werden.

Die Dichte $\delta$ des Füllproduktes ist meist bekannt oder kann über die bekannten Messmethoden ermittelt werden. Für Wasser kann die Dichte näherungsweise mit $1000 kg/m^3$ angenommen werden und hat dann keinen Einfluss auf die Berechnung.

Entsprechend lässt sich nun aus dem für eine bestimmte Öffnungsposition $H_i$ gemessenen Volumenstrom q, dem bestimmten Differenzdruck $\Delta p$ und der bestimmten Dichte $\delta$ der Kv-Wert für diese Öffnungsposition bestimmen durch:

$$K_v(H_i) = q_\infty * \sqrt{\frac{1000 mbar}{\Delta p} * \frac{\delta}{1000 kg / m^3}} \quad (2)$$

Um hier eine Funktion des Leitwerts Kv(H) über die Öffnungspositionen $H_i$ zu ermitteln, wird nach der Bestimmung aller Leitwerte Kv($H_i$) durch Bestimmung einer Ausgleichskurve durch die jeweiligen Leitwerte Kv($H_i$) eine Funktion des Leitwerts über der Öffnungspositionen des Proportionalventils ermittelt. Die Ausgleichskurve kann beispielsweise durch lineare Regression, die Methode der kleinsten Quadrate, einen Fit-Algorithmus oder andere bekannte Verfahren zur Bestimmung einer Ausgleichskurve durch Messwerte bestimmt werden. Diese Bestimmung und Berechnung wird für verschiedene diskrete Werte der Öffnungsposition $H_i$ durchgeführt.

Als Ausgleichskurve kann beispielsweise ein Polynom 6. Ordnung verwendet werden, so wie es beispielsweise in Figur 2 gezeigt ist, in welcher der Leitwert über der jeweiligen Öffnungsposition des Proportionalventils aufgezeichnet ist. In der Figur 2 wurden zur Bestimmung der Ausgleichskurve ein erster Wertebereich der Öffnungspositionen von 0 bis 2mm und ein zweiter Wertebereich der Öffnungsposition von 2mm bis 6mm verwendet. Dabei wurden zur Ausbildung der Kurve der Kv-Werte 2 über die Öffnungsposition H des Proportionalventils entsprechend die diskreten Werte 20 im ersten Wertebereich und die diskreten Werte 22 im zweiten Wertebereich zur Ausbildung einer Ausgleichskurve unter Verwendung eines Polynoms 6. Ordnung verwendet.

Für einen bestimmten Hub H des Proportionalventils ergibt sich damit beispielsweise als Ausgleichskurve des Leitwerts Kv:

$$Kv(H) = c_6 * H^6 + c_5 * H^5 + c_4 * H^4 + c_3 * H^3 + c_2 * H^2 + c_1 * H + c_7 \qquad (3)$$

Wobei $c_1$ bis $c_7$ die entsprechenden Koeffizienten zur Anpassung der Funktion an die Messewerte sind.

Durch die Bestimmung der Ausgleichsfunktion können dann auch alle Zwischenwerte der Öffnungspositionen bei der Abfüllung berücksichtigt werden. Damit kann für eingeschwungene Zustände für jede Öffnungsposition der entsprechende Volumenstrom berechnet werden:

$$q_{\infty}(H) = K_v(H) * \sqrt{\frac{\Delta p}{1000 mbar} * \frac{1000 kg / m^3}{\delta}} \quad (4)$$

Hierbei ist jedoch zu beachten, dass es sich bei dieser Funktion des Leitwerts Kv(H) des Proportionalventils für jede Öffnungsposition um den jeweiligen Volumenstrom im eingeschwungenen Zustand, also nach Konstanthalten der Öffnungsposition und längerem Warten handelt. Beim Öffnen, Schließen oder Verfahren des Proportionalventils von einer Öffnungsposition in eine andere Öffnungsposition kommen hingegen noch weitere dynamische Einflüsse zur Geltung.

Um die dynamischen Einflüsse zu betrachten, wird zunächst eine Analogie aus dem Bereich der Elektrotechnik gezogen, wobei die in der nachfolgenden Tabelle genannte elektrisch-mechanische Analogie hinzugezogen wird:

| elektrische Betrachtung | mechanische Betrachtung |
|---|---|
| Ohmscher Widerstand | Kv-Wert |
| Spannung | Differenzdruck |
| Strom | Volumenstrom |
| Induktivität | beschleunigte Masse |

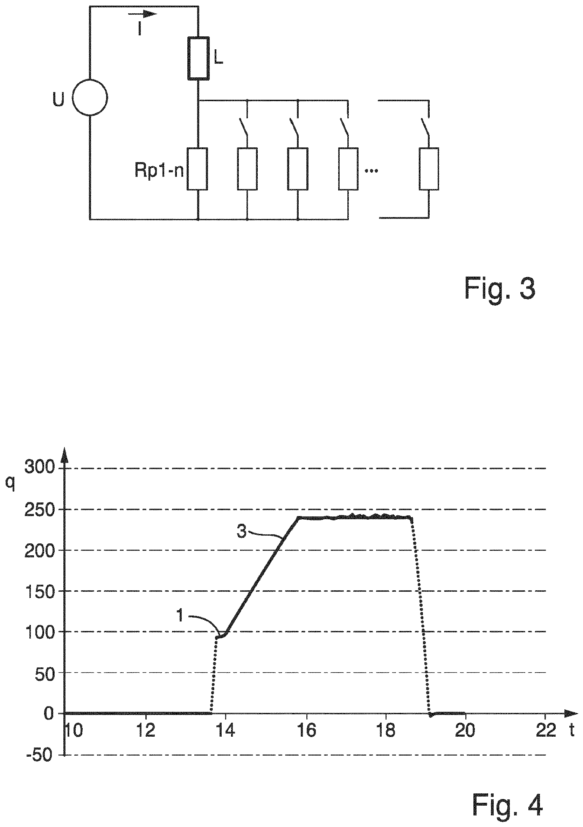

In Figur 3 ist schematisch ein Ersatzschaltbild eines elektrischen Modells für ein Proportionalventil gezeigt. Die Widerstände Rp1-n entsprechen dabei einem vorwählbaren Widerstand, welcher dem Leitwert Kv entspricht und welche dem Charakter des Proportionalventils gemäß, durch Öffnen beziehungsweise Schließen der jeweiligen Schalter der parallel geschalteten Widerstände variiert werden können.

Die Stromquelle, die eine Spannung U bereitstellt, entspricht dabei dem Differenzdruck, welcher für die Flüssigkeit einen entsprechenden Druck bereitstellt. Der Strom I entspricht dem Volumenstrom und die Induktivität L der beschleunigten Masse.

Das dynamische Verhalten dieses elektrischen Schaltkreises lässt sich über die Maschengleichung darstellen, bei welcher es sich um eine inhomogene Differenzialgleichung erster Ordnung handelt:

$$u(t) = Rp * i(t) + L * \frac{di(t)}{dt} \quad (5)$$

Dieser inhomogenen Differentialgleichung erster Ordnung wird folgende Lösung für ansteigende Widerstandswerte, also kontinuierlich hinzugeschaltete Rp1-n, gerecht:

$$i(t) = i_\infty + (i_0 - i_\infty) * e^{-\frac{t}{\tau}}$$

$$\text{mit } \tau = \frac{L}{R_p}$$

$$\text{mit } i_\infty = \frac{U}{R_p}$$

mit $i_0$ = Strom zum Beginn des Einschwingvorgangs.

Zu beachten ist allerdings, dass dieser Einschwingvorgang durch das sich kontinuierlich ändernde Rp ständig von einem neuen Einschwingvorgang abgebrochen und ersetzt wird.

Eine ähnliche Lösung der Maschengleichung lässt sich für abfallende Widerstandswerte, also kontinuierlich weggeschaltete Rp1-n, finden:

$$i(t) = i_0 + (i_\infty - i_0) * (1 - e^{-\frac{t}{\tau}})$$

$$\text{mit } \tau = \frac{L}{R_p}$$

$$\text{mit } i_\infty = \frac{U}{R_p}$$

mit $i_0$ = Strom zum Beginn des Einschwingvorgangs.

Zu beachten ist allerdings, dass auch dieser Einschwingvorgang durch das sich kontinuierlich ändernde Rp ständig von einem neuen Einschwingvorgang abgebrochen und ersetzt wird.

Das elektrische Bild lässt sich auf das mechanische Bild übertragen, so dass sich folgende Zusammenhänge für abfallende Hübe H (entspricht ansteigenden Widerstandswerten) ergibt:

$$q(t) = q_\infty + (q_0 - q_\infty) * e^{-\frac{\Delta t}{\tau}}$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

mit $q_0$ = Volumenstrom zum Beginn des Einschwingvorgangs

mit m = Konstante.

Folgende Zusammenhänge ergeben sich für ansteigende Hübe H (entspricht abfallenden Widerstandswerten):

$$q(t) = q_0 + (q_\infty - q_0) * (1 - e^{-\frac{\Delta t}{\tau}})$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

mit $q_0$ = Volumenstrom zum Beginn des Einschwingvorgang

mit m = Konstante.

Diese Formeln gelten jeweils für eine definierte inkrementelle Änderung der Öffnungsposition. Ändert sich die Öffnungsposition noch während des Einschwingvorgangs erneut, so wird diese durch einen neuen Einschwingvorgang mit neuen Parametern ersetzt.

Für die in Figur 1 gezeigte Kurve des Volumenstroms 1 wurde nun anhand der zugrundeliegenden Öffnungskurve des Proportionalventils mit den oben beschriebenen Formeln und auf Grundlage der gemessenen Leitwerte der gesamte Verlauf des Volumenstroms 1 als simulierter Volumenstrom 3 dargestellt, so wie sie sich aus Figur 4 ergibt.

Entsprechend lässt sich sofort erkennen, dass der gemessene Volumenstrom 1 quasi identisch mit dem simulierten Volumenstrom 3 übereinstimmt. Entsprechend kann der simulierte Volumenstrom 3, bei Kenntnis des Differenzdrucks, der Dichte des Füllproduktes sowie des Leitwerts, eine ständige Messung des Volumenstroms 1 während des Füllbetriebs ersetzen.

Damit kann bei Verwendung des vorgeschlagenen Verfahrens auf ein Messglied zur Regelung des Füllvorganges auf Grundlage des gemessenen Volumenstroms verzichtet werden. Vielmehr kann das Proportionalventil so auf einfache Weise nach Berechnung des simulierten Volumenstroms 3 direkt über eine entsprechend bestimmte Öffnungskurve angesteuert werden, und das gewünschte Füllvolumen erreicht werden. Anstelle der Regelung kann daher eine Steuerung verwendet werden.

Zur Bestimmung des Füllvolumens, welches in den zu befüllenden Behälter eingeleitet wird, wird dann die simulierte Volumenstromkurve 3 aufintegriert.

Nun wird noch eine Spezialsituation am Ende des Füllvorganges betrachtet. Wie bereits eingangs diskutiert, ist die Schließkurve bei einem Proportionalventil relativ ausgedehnt und der Schließvorgang kann sich bis zu 500 Millisekunden hinziehen. Damit wird der Volumenstrom, auch aufgrund seiner Trägheit, nur langsam abgeschaltet, so dass sich entsprechend ein zu beachtender Nachlauf ergibt, der bei der Berechnung des gesamten Füllvolumens berücksichtigt werden muss.

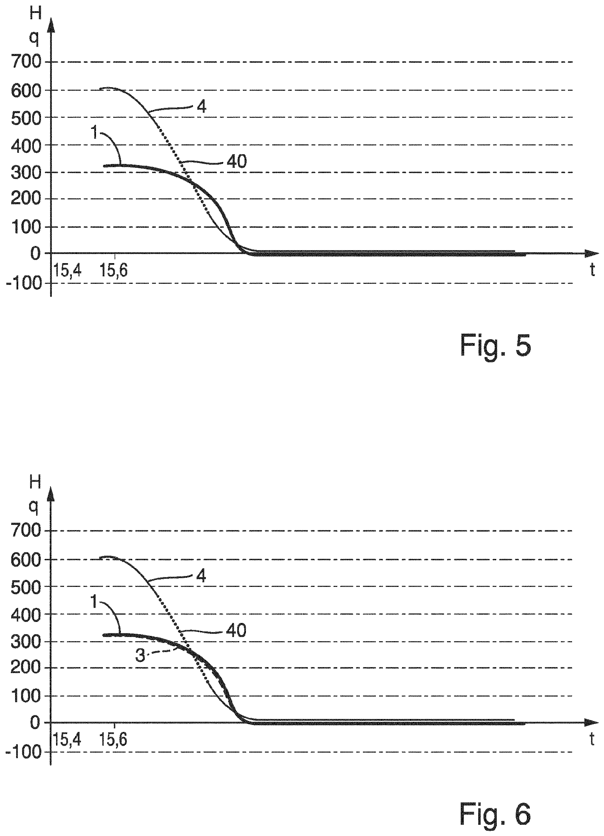

In Figur 5 ist dabei eine Kurve der Öffnungspositionen 4 des Proportionalventils im Bereich einer vorgegebenen Schließkurve 40 über die Zeit t gezeigt. Dabei ist zu erkennen, dass die Werte $H_i$ der Öffnungspositionen 4 im gezeigten Ausführungsbeispiel diskret sind, da das Proportionalventil mit einem Schrittmotor angetrieben wird.

Gleichzeitig ist in Figur 5 auch eine Kurve des gemessenen Volumenstroms 1 gezeigt, die sich beim Schließen des Proportionalventils ergibt.

Auf Grundlage des oben beschriebenen Verfahrens zur Bestimmung des simulierten Volumenstroms für eine vorgegebene Öffnungskurve kann analog dazu der Volumenstrom auch für die vorgegebene Schließkurve 40, also eine Kurve der Öffnungspositionen H(t) des Proportionalventils beim Schließen, berechnet werden. Durch Aufintegration des Volumenstroms über die ganze Schließkurve hinweg kann so das gesamte Nachlaufvolumen bestimmt werden.

In Figur 6 ist auch der mittels des oben beschriebenen Verfahrens simulierte Volumenstrom 3 dargestellt. Es ergibt sich, dass hier wieder die Simulation des Volumenstroms 3 des Nachlaufs über die vorgegebene Schließkurve hinweg mit der gemessenen Kurve des Volumenstroms 1 übereinstimmt. Entsprechend lässt sich durch eine Vorausberechnung des Nachlaufvolumenstroms der genaue Abschaltzeitpunkt beziehungsweise der Zeitpunkt zum Beginn des Durchlaufens der Abschaltkurve auf diese Weise korrekt bestimmen, so dass auf eine Regelung des Füllvorganges über ein Messglied, beispielsweise eine Wägezelle oder einen Durchflussmesser, verzichtet werden kann. Damit kann hier auf eine Regelung verzichtet werden und stattdessen eine Steuerung verwendet werden.

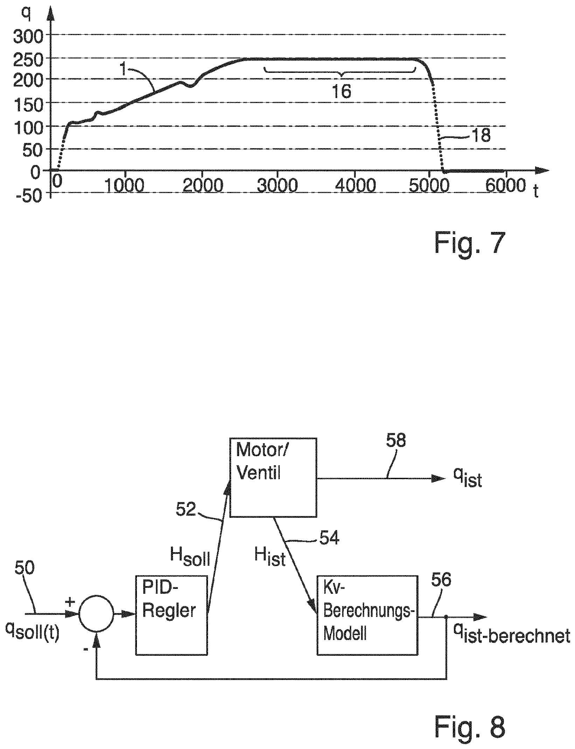

Gemäß einer in Figur 7 gezeigten Variante kann das Verfahren aber auch in Aufbauten verwendet werden, in welchen jedem Proportionalventil ein Messglied zugeordnet ist, beispielsweise ein Durchflussmesser oder eine Wägezelle. Damit kann bei einem statischen Niveau 16 des gemessenen Volumenstroms q der konkrete Leitwert Kv des Proportionalventils bei diesem Volumenstrom bestimmt werden und hieraus dann der Volumenstrom während des Durchlaufens der Abschaltkurve 18 bestimmt werden. Damit lässt sich dann der Abschaltzeitpunkt, also der Zeitpunkt, zu welchem begonnen wird, die Abschaltkurve zu durchlaufen, genau bestimmen.

Die Berechnung wird möglichst nah am vermuteten Abschaltzeitpunkt durchgeführt, um die Berechnung des Nachlaufvolumens bei möglichst den Bedingungen durchzuführen, welche dann im Nachlauf tatsächlich auch auftreten, beispielsweise bei dem Flüssigkeitsniveau im Vorlagekessel, dem entsprechenden Kesseldruck beziehungsweise der Produkttemperatur, welche sich dann wiederum auf die Viskosität des Füllprodukts auswirkt.

Im Einzelnen werden für die Berechnung des Nachlaufs die folgenden Schritte durchgeführt, wobei die Berechnung bevorzugt zu dem Zeitpunkt erfolgt, zu welchem das Proportionalventil den maximalen Volumenstrom erreicht hat und noch ausreichend Zeit zum Füllende besteht:

1. Ermittlung der Dauer der Bewegung aus Motorbeschleunigung und der maximalen Motorgeschwindigkeit zur Bestimmung der Schließkurve H(t);
2. Ermittlung des vorherrschenden statischen Niveaus im Bereich des Plateaus 16 aus:

Kv(H) und aktuellem Volumenstrom q
Das statische Niveau wird während der Berechnung für die kontinuierliche Berechnung von $q_\infty$ benötigt

3. Simulierte (berechnete) inkrementelle Senkung der Öffnungsposition H gemäß Bewegungsprofil in Abhängigkeit der Zeit t
4. Berechnung Kv(H) bei der neuen Öffnungsposition
5. Berechnung $q_\infty$ und $\tau$ mit Kv(H)
6. Berechnung q(t)
7. ->Sprung zu 3. oder Ende der Berechnung, falls Bewegungsdauer t abgelaufen

Durch die Berechnung des Nachlaufs kann eine höhere Genauigkeit bei Schwankungen des Füllproduktniveaus im Kessel sowie bei Schwankungen des Drucks im Kessel sowie bei Schwankungen der Temperatur erreicht werden. Dabei wird bereits der erste Behälter optimal gefüllt und auf eine Nachlaufregelung mit einem Messglied kann verzichtet werden.

In Figur 8 ist eine Regelung gezeigt, welche den über das Kv-Modell ermittelten berechneten Volumenstrom q(t) für eine gegebene Öffnungsposition H des Proportionalventils zunutze macht, wobei das Kv-Modell auch in diesem Ausführungsbeispiel ein Messglied ersetzt.

Ein Soll-Volumenstrom 50 wird der Regelung, die beispielsweise als PID-Regler ausgebildet ist, als Führgröße vorgegeben. Es kann sich bei dem Soll-Volumenstrom 50 auch um eine Soll-Volumenstrom-Kurve $q_{soll}(t)$ handeln, also einen über den Zeitverlauf veränderlichen Volumenstrom, welcher in einen zu befüllenden Behälter einströmen soll.

Über den PID-Regler wird entsprechend auf dieser Grundlage eine Soll-Öffnungsposition $H_{soll}$ bestimmt, welche als Soll-Öffnungsposition 52 an den Aktuator des Proportionalventils übergeben wird. Das Proportionalventil öffnet auf Grundlage dieses Steuerbefehls und übergibt seine Ist-Öffnungsposition $H_{ist}$ als Ist-Öffnungsposition 54 als Öffnungsposition an das Kv-Berechnungsmodell. Aufgrund der Trägheit des Proportionalventils können Ist-Öffnungsposition 54 und Soll-Öffnungsposition 52 auseinanderfallen.

Das Kv-Modell berechnet aufgrund der Ist-Öffnungsposition $H_{ist}$ einen berechneten Ist-Volumenstrom $q_{ist-berechnet}$ als berechneten Ist-Volumenstrom 56, der als Regelgröße der Regelung wieder zugeführt wird und mit der Führgröße des Soll-Volumenstroms $q_{soll}$ verglichen wird. Entsprechend wird auf Grundlage der Ist-Öffnungsposition $H_{ist}$ die Regelgröße $q_{ist-berechnet}$ ermittelt, welche dann zur Regelung der Soll-Öffnungsposition $H_{soll}$ verwendet wird. Entgegen den herkömmlichen Regelungen kann auf diese Weise auf ein Messglied zur Bestimmung der Regelgröße, also des Ist-Volumenstroms, verzichtet werden. Das Messglied wird vielmehr durch das Kv-Modell ersetzt.

Wie oben bereits diskutiert und gezeigt, kann über das Kv-Modell der Ist-Volumenstrom bei einer bestimmten Öffnungsposition mit einer guten Genauigkeit bestimmt werden. Der berechnete Ist-Volumenstrom $q_{ist-berechnet}$ entspricht daher weitgehend dem tatsächlich das Proportionalventil durchfließenden Ist-Volumenstrom $q_{ist}$, der als Ist-Volumenstrom 58 gemessen werden könnte.

Bezugszeichenliste

| | |
|---|---|
| 1 | gemessener Volumenstrom |
| 10 | Öffnungsvorgang |
| 12 | Plateau |
| 14 | Öffnungsrampe |
| 16 | Plateau hohen Volumenstroms |
| 18 | Schließkurve |
| 2 | Leitwert Kv |
| 20 | erster Wertebereich |
| 22 | zweiter Wertebereich |

3       simulierter Volumenstrom
4       Öffnungsposition
40      Schließkurve
50      Soll-Volumenstrom
52      Soll-Öffnungsposition
54      Ist-Öffnungsposition
56      berechneter Ist-Volumenstrom
58      Ist-Volumenstrom
t       Zeit
H       Öffnungsposition
q       Volumenstrom

**Patentansprüche**

1.  Verfahren zum Befüllen eines Behälters mit einem Füllprodukt mittels eines Proportionalventils, umfassend die Schritte

    - Ermitteln des Volumenstroms als eine Funktion der Zeit (q(t)) für eine vorgegebene Öffnungskurve (H(t)) des Proportionalventils;
    - Steuern der Befüllung des Behälters auf Grundlage der Funktion des Volumenstroms (q(t)), wobei der Volumenstrom (q(t)) für eine vorgegebene Öffnungskurve (H(t)) des Proportionalventils durch Lösung einer mechanischen Maschengleichung bestimmt wird und für abfallende Öffnungspositionen (H(t)) durch

$$q(t) = q_\infty + (q_0 - q_\infty) * e^{-\frac{\Delta t}{\tau}}$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

    mit $q_0$ = Volumenstrom zum Beginn des Einschwingvorgangs und
    mit m = Konstante

    und für ansteigende Öffnungspositionen (H(t)) durch

$$q(t) = q_0 + (q_\infty - q_0) * (1 - e^{-\frac{\Delta t}{\tau}})$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

    mit $q_0$ = Volumenstrom zum Beginn des Einschwingvorgang
    mit m = Konstante

    gelöst wird.

2.  Verfahren zum Befüllen eines Behälters mit einem Füllprodukt mittels eines Proportionalventils, umfassend die Schritte

- Ermitteln des Volumenstroms als eine Funktion der Zeit (q(t)) für eine vorgegebene Öffnungskurve (H(t)) des Proportionalventils;
- Berechnen eines Ist-Volumenstroms ($q_{\text{ist-berechnet}}$) auf Grundlage der ermittelten Funktion des Volumenstroms (q(t)) für eine Ist-Öffnungsposition ($H_{\text{ist}}$) des Proportionalventils;
- Regeln der Befüllung des Behälters mit einer Soll-Volumenstrom-Kurve ($q_{\text{soll}}$(t)) als Führgröße und dem berechneten Ist-Volumenstrom ($q_{\text{ist-berechnet}}$) als Regelgröße, wobei

der Volumenstrom (q(t)) für eine vorgegebene Öffnungskurve (H(t)) des Proportionalventils durch Lösung einer mechanischen Maschengleichung bestimmt wird und für abfallende Öffnungspositionen (H(t)) durch

$$q(t) = q_\infty + (q_0 - q_\infty) * e^{-\frac{\Delta t}{\tau}}$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

mit $q_0$ = Volumenstrom zum Beginn des Einschwingvorgangs und
mit m = Konstante

und für ansteigende Öffnungspositionen (H(t)) durch

$$q(t) = q_0 + (q_\infty - q_0) * (1 - e^{-\frac{\Delta t}{\tau}})$$

$$\text{mit } \tau = K_v(H) * m$$

$$\text{mit } q_\infty = K_v(H) * \sqrt{\frac{\Delta p}{1000 mbar} * \frac{1000 kg/m^3}{\delta}}$$

mit $q_0$ = Volumenstrom zum Beginn des Einschwingvorgang
mit m = Konstante

gelöst wird.

3. Verfahren gemäß Anspruch 1 oder 2, **dadurch gekennzeichnet, dass** die Funktion des Leitwerts (Kv(H)) des Proportionalventils für jede Öffnungsposition (H) durch ein vorheriges Messen des Leitwerts (Kv) bei diskreten Öffnungspositionen (H) und Bestimmen einer Funktion des Leitwerts (Kv(H)) aus den diskreten Werten, bevorzugt durch das Bestimmen einer Ausgleichsfunktion, ermittelt wird.

4. Verfahren gemäß Anspruch 3, **dadurch gekennzeichnet, dass** die Funktion des Leitwerts (Kv(H)) durch eine Regressionsanalyse, die Methode der kleinsten Quadrate, einen Fit oder Bestimmung eines Ausgleichspolynoms, bevorzugt eine Ausgleichspolynoms 6. Ordnung, an die diskreten Werte angepasst wird.

5. Verfahren gemäß Anspruch 3 oder 4, **dadurch gekennzeichnet, dass** zum Messen des Leitwerts (Kv) an einer Öffnungsposition (H) der Volumenstrom (q), der Differenzdruck *(Δp)* und die Dichte (*δ*) des das Proportionalventil durchfließenden Mediums bestimmt wird und der Leitwert wie folgt berechnet wird:

$$K_v = q_\infty * \sqrt{\frac{1000 mbar}{\Delta p} * \frac{\delta}{1000 kg/m^3}} \, .$$

**6.** Verfahren gemäß einem der vorstehenden Ansprüche, **dadurch gekennzeichnet, dass** der Differenzdruck ($\Delta$p) über Drucksensoren im Kesselboden des Vorlagekessels und Addition der statischen Höhe bis zum Ventilauslauf, über Niveausensoren im Vorlagekessel und Addition der statischen Höhe bis zum Ventilauslauf, und/oder über Drucksensoren direkt am Auslauf des Füllorgans bestimmt wird.

**7.** Verfahren gemäß einem der vorstehenden Ansprüche, **dadurch gekennzeichnet, dass** nach der Bestimmung der Funktion des Volumenstroms (q(t)) alle nachfolgenden Befüllvorgänge anhand dieser Funktion gesteuert werden oder die Funktion des Volumenstroms (q(t)) für jede neue Befüllung auf Basis der Funktion des Leitwerts (Kv(H)) neu berechnet wird.

**8.** Verfahren gemäß einem der vorstehenden Ansprüche, **dadurch gekennzeichnet, dass** für eine vorgegebene Schließkurve (H(t)) zum Beenden des Füllvorgangs der Volumenstrom (q(t)) und durch Integration über den Volumenstrom das Nachlaufvolumen berechnet wird und bei der Bestimmung des Zeitpunkts zum Durchlaufen der Schließkurve das Nachlaufvolumen berücksichtigt wird.

**9.** Verfahren gemäß Anspruch 8, **dadurch gekennzeichnet, dass** das Nachlaufvolumen für jeden Befüllvorgang vor dem geschätzten Füllende berechnet wird.

**10.** Verfahren gemäß einem der vorstehenden Ansprüche, **dadurch gekennzeichnet, dass** das gesamte Füllvolumen des Füllprodukts durch Integration der Funktion des Volumenstroms (q(t)) über den Füllvorgang hinweg bestimmt wird und das Füllende auf dieser Grundlage bestimmt wird.

**Claims**

**1.** Method for filling a container with a fill product by means of a proportional valve, containing the steps

- determining the volume flow as a function of time (q(t)) for a predetermined opening curve (H(t)) of the proportional valve;
- controlling the filling of the container based on the function of the volume flow (q(t)), wherein the volume flow (q(t)) for a predetermined opening curve (H(t)) of the proportional valve is determined by solving a mechanical mesh equation and is solved for declining opening positions (H(t)) by

$$q(t) = q_\infty + (q_0 - q_\infty) * e^{-\frac{\Delta t}{\tau}}$$

with

$$\tau = K_v(H) * m$$

with

$$q_\infty = K_v(H) * \sqrt{\frac{\Delta p}{1000 mbar} * \frac{1000 kg/m^3}{\delta}}$$

with $q_0$ = volume flow at the beginning of the transient process and
with m = constant
and for ascending opening positions (H(t)) by

$$q(t) = q_0 + (q_\infty - q_0) * (1 - e^{-\frac{\Delta t}{\tau}})$$

with

$$\tau = K_v(H) * m$$

with

$$q_\infty = K_v(H) * \sqrt{\frac{\Delta p}{1000 mbar} * \frac{1000 kg / m^3}{\delta}}$$

with $q_0$ = volume flow at the beginning of the transient process
with m = constant.

2.  Method for filling a container with a fill product by means of a proportional valve, containing the steps

   - determining the volume flow as a function of time (q(t)) for a predetermined opening curve (H(t)) of the proportional valve;
   - calculating an actual volume flow ($q_{ist\text{-}berechnet}$) on the basis of the determined function of the volume flow (q(t)) for an actual opening position ($H_{ist}$) of the proportional valve;
   - regulation of the filling of the container with a target volume flow curve ($q_{soll}$(t)) as guide variable and with the calculated actual volume flow ($q_{ist\text{-}berechnet}$) as control variable, wherein
   the volume flow (q(t)) for a predetermined opening curve (H(t)) of the proportional valve is determined by solving a mechanical mesh equation and is solved for declining opening positions (H(t)) by

$$q(t) = q_\infty + (q_0 - q_\infty) * e^{-\frac{\Delta t}{\tau}}$$

with

$$\tau = K_v(H) * m$$

with

$$q_\infty = K_v(H) * \sqrt{\frac{\Delta p}{1000 mbar} * \frac{1000 kg / m^3}{\delta}}$$

with $q_0$ = volume flow at the beginning of the transient process and
with m = constant
and for ascending opening positions (H(t)) by

$$q(t) = q_0 + (q_\infty - q_0) * (1 - e^{-\frac{\Delta t}{\tau}})$$

with

$$\tau = K_v(H) * m$$

with

$$q_\infty = K_v(H) * \sqrt{\frac{\Delta p}{1000 mbar} * \frac{1000 kg / m^3}{\delta}}$$

with $q_0$ = volume flow at the beginning of the transient process

with m = constant.

3. Method according to claim 1 or 2, **characterised in that** the function of the conductivity (Kv (H)) of the proportional valve for each opening position (H) is determined by a previous measuring of the conductivity (Kv) in the case of discrete opening positions (H) and determining a function of the conductivity (Kv (H)) from the discrete values, preferably by means of determining a compensating function.

4. Method according to claim 3, **characterised in that** the function of the conductivity (Kv(H)) is adjusted to the discrete values by means of a regression analysis, the method of least squares, a fit or determination of a compensating polynomial, preferably an order 6 compensating polynomial.

5. Method according to claim 3 or 4, **characterised in that** in order to measure the conductivity (Kv) at an opening position (H) the volume flow (q), the differential pressure ($\Delta$p) and the density ($\delta$) of the medium flowing through the proportional valve is determined and the conductivity is calculated as follows:

$$K_v = q_\infty * \sqrt{\frac{1000 mbar}{\Delta p} * \frac{\delta}{1000 kg/m^3}}.$$

6. Method according to one of the preceding claims, **characterised in that** the differential pressure ($\Delta$p) is determined by pressure sensors in the boiler end of the pre-run boiler and addition of the static height until the valve output, by level sensors in the pre-run boiler and addition of the static height until the valve output, and/or by pressure sensors directly at the output of the filling mechanism.

7. Method according to one of the preceding claims, **characterised in that** after determining the function of the volume flow (q(t)) all following fill operations are controlled using this function or the function of the volume flow (q(t)) is calculated anew for each new fill on the basis of the function of the conductivity (Kv(H)).

8. Method according to one of the preceding claims, **characterised in that** for a predetermined shutting curve (H(t)) for ending the filling operation the volume flow (q(t)) and, by integration over the volume flow, the lag volume is calculated, and in the determining of the point in time for passing through the shutting curve, the lag volume is taken into consideration.

9. Method according to claim 8, **characterised in that** the lag volume for each fill operation is calculated prior to the estimated fill end.

10. Method according to one of the preceding claims, **characterised in that** the entire fill volume of the fill product is determined by integrating the function of the volume flow (q(t)) for the entirety of the fill operation and the fill end is determined on this basis.

**Revendications**

1. Procédé de remplissage d'un récipient avec un produit de remplissage au moyen d'une soupape proportionnelle, comprenant les étapes

- détermination du flux volumique comme fonction du temps (q(t)) pour une courbe d'ouverture prédéterminée (H(t)) de la soupape proportionnelle ;
- commande du remplissage du récipient sur la base de la fonction du flux volumique (q(t)), dans lequel le flux volumique (q(t)) pour une courbe d'ouverture prédéterminée (H(t)) de la soupape proportionnelle est déterminé en résolvant une équation de maille mécanique et pour des positions d'ouverture (H(t)) diminuant, par

$$q(t) = q_\infty + (q_0 - q_\infty) * e^{-\frac{\Delta t}{\tau}}$$

avec

$$\tau = K_v(H) * m$$

avec

$$q_\infty = K_v(H) * \sqrt{\frac{\Delta p}{1000 mbar} * \frac{1000 kg/m^3}{\delta}}$$

avec $q_0$ = flux volumique au début du régime transitoire et
avec m = constante
et, pour des positions d'ouverture (H(t)) augmentant, par

$$q(t) = q_0 + (q_\infty - q_0) * (1 - e^{-\frac{\Delta t}{\tau}})$$

avec

$$\tau = K_v(H) * m$$

avec

$$q_\infty = K_v(H) * \sqrt{\frac{\Delta p}{1000 mbar} * \frac{1000 kg/m^3}{\delta}}$$

avec $q_0$ = flux volumique au début du régime transitoire et
avec m = constante.

2. Procédé de remplissage d'un récipient avec un produit de remplissage au moyen d'une soupape proportionnelle, comprenant les étapes

- détermination du flux volumique comme fonction du temps (q(t)) pour une courbe d'ouverture prédéterminée (H(t)) de la soupape proportionnelle ;
- calcul d'un flux volumique réel ($q_{ist\text{-}berechnet}$) sur la base de la fonction déterminée du flux volumique (q(t)) pour une position d'ouverture réelle ($H_{ist}$) de la soupape proportionnelle ;
- réglage du remplissage du récipient avec une courbe de flux volumique de consigne ($q_{soll}$(t)) comme grandeur de commande et avec le flux volumique réel calculé ($q_{ist\text{-}berechnet}$) comme grandeur commandée, dans lequel le flux volumique (q(t)) pour une courbe d'ouverture prédéterminée (H(t)) de la soupape proportionnelle est déterminé en résolvant une équation de maille mécanique et pour des positions d'ouverture (H(t)) diminuant, par

$$q(t) = q_\infty + (q_0 - q_\infty) * e^{-\frac{\Delta t}{\tau}}$$

avec

$$\tau = K_v(H) * m$$

avec

$$q_\infty = K_v(H) * \sqrt{\frac{\Delta p}{1000 mbar} * \frac{1000 kg/m^3}{\delta}}$$

avec $q_0$ = flux volumique au début du régime transitoire et
avec m = constante
et, pour des positions d'ouverture (H(t)) augmentant, par

$$q(t) = q_0 + (q_\infty - q_0) * (1 - e^{-\frac{\Delta t}{\tau}})$$

avec

$$\tau = K_v(H) * m$$

avec

$$q_\infty = K_v(H) * \sqrt{\frac{\Delta p}{1000 mbar} * \frac{1000 kg/m^3}{\delta}}$$

avec $q_0$ = flux volumique au début du régime transitoire et
avec m = constante.

3. Procédé selon la revendication 1 ou 2, **caractérisé en ce qu'**on détermine la fonction de la valeur de débit (Kv(H)) de la soupape proportionnelle pour chaque position d'ouverture (H) via une mesure antérieure de la valeur de débit (Kv) pour des positions d'ouverture (H) discrètes et la détermination d'une fonction de la valeur de débit (Kv(H)) à partir des valeurs discrètes, de préférence via la détermination d'une fonction de compensation.

4. Procédé selon la revendication 3, **caractérisé en ce que** la fonction de la valeur de débit (Kv(H)) est adaptée aux valeurs discrètes par une analyse régressive, par la méthode des moindres carrés, par un ajustement ou une détermination d'un polynôme de compensation, de préférence un polynôme de compensation de 6$^{\text{ème}}$ degré.

5. Procédé selon la revendication 3 ou 4, **caractérisé en ce que,** pour mesurer la valeur de débit (Kv) au niveau d'une position d'ouverture (H) du flux volumique (q), on détermine la pression différentielle ($\Delta p$) et la densité ($\delta$) du fluide passant par la soupape proportionnelle et on calcule la valeur de débit comme suit :

$$K_v = q_\infty * \sqrt{\frac{1000 mbar}{\Delta p} * \frac{\delta}{1000 kg/m^3}}.$$

6. Procédé selon l'une quelconque des revendications précédentes, **caractérisé en ce que** la pression différentielle ($\Delta p$) est déterminée par l'intermédiaire de capteurs de pression dans le fond de chaudière de la chaudière amont et par l'addition de la hauteur statique jusqu'à la sortie de soupape, par l'intermédiaire de capteurs de niveau dans la chaudière amont et par l'addition de la hauteur statique jusqu'à la sortie de soupape et/ou par l'intermédiaire de capteurs de pression directement à la sortie de l'organe de remplissage.

7. Procédé selon l'une quelconque des revendications précédentes, **caractérisé en ce que,** après la détermination de la fonction du flux volumique (q(t)), toutes les opérations de remplissage suivantes sont commandées à l'aide de cette fonction ou la fonction du flux volumique (q(t)) est de nouveau calculée pour chaque nouveau remplissage sur la base de la fonction de la valeur de débit (Kv(H)).

8. Procédé selon l'une quelconque des revendications précédentes, **caractérisé en ce que,** pour une courbe de fermeture prédéterminée (H(t)) afin de terminer l'opération de remplissage, on calcule le flux volumique (q(t)) et, par intégration sur le flux volumique, on calcule le volume de poursuite et, lors de la détermination de l'instant destiné au suivi de la courbe de fermeture, on prend en compte le volume de poursuite.

9. Procédé selon la revendication 8, **caractérisé en ce que** le volume de poursuite est calculé pour chaque opération de remplissage avant la fin estimée de remplissage.

10. Procédé selon l'une quelconque des revendications précédentes, **caractérisé en ce que** le volume de remplissage total du produit de remplissage est déterminé par intégration de la fonction du flux volumique (q(t)) au-delà de l'opération de remplissage et la fin de remplissage est déterminée sur cette base.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3373269 B
- WO 9849089 A1
- WO 2014206774 A1